# EUROPÄISCHE PATENTSCHRIFT

(11) **EP 0 868 822 B1**
(45) Veröffentlichungstag und Bekanntmachung des Hinweises auf die Patenterteilung: **07.05.2003**
(21) Anmeldenummer: 96946031.0
(22) Anmeldetag: 02.12.1996
(51) Int. Cl.: H04Q 7/24, H04Q 7/38, H04Q 11/04

(54) **VERFAHREN ZUR ÜBERTRAGUNG VON INFORMATIONEN IN EINEM UNIVERSELLEN ÜBERTRAGUNGSNETZ**
PROCESS FOR TRANSMITTING DATA IN A UNIVERSAL TRANSMISSION SYSTEM
SYSTEME DE TRANSMISSION D'INFORMATIONS DANS UN RESEAU UNIVERSEL DE TRANSMISSION

(30) Priorität: 19.12.1995 DE 19547468
(43) Veröffentlichungstag der Anmeldung: 07.10.1998
(73) Patentinhaber: SIEMENS AKTIENGESELLSCHAFT, 80333 München (DE)
(72) Erfinder: HAFERBECK, Ralf, D-85716 Unterschleissheim (DE); ERNST, Detlef, D-82041 Oberhaching (DE)
(86) Internationale Anmeldenummer: DE9602306
(87) Internationale Veröffentlichungsnummer: WO97023105

(56) Entgegenhaltungen:
- EP-A- 0 679 042
- IEEE JOURNAL ON SELECTED AREAS IN COMMUNICATIONS, Bd. 12, Nr. 5, 1.Juni 1994, NEW YORK, US, Seiten 900-908, XP000464975 MCTIFFIN M J ET AL: "MOBILE ACCESS TO AN ATM NETWORK USING A CDMA AIR INTERFACE"
- 1994 IEEE GLOBECOM. COMMUNICATIONS: THE GLOBAL BRIDGE, SAN FRANCISCO, US, NOV. 28 - DEC. 2, 1994, Bd. 3 OF 3, INSTITUTE OF ELECTRICAL AND ELECTRONICS ENGINEERS, Seiten 1691-1695, XP000488814 HAUWERMEIREN VAN L ET AL: "REQUIREMENTS FOR MOBILITY SUPPORT IN ATM"

## Beschreibung

Die Erfindung betrifft ein Verfahren zur Übertragung von Informationen in einem universellen Übertragungsnetz, in dem mobilfunknetzspezifische und festnetzspezifische Funktionen durchgeführt werden, gemäß dem Oberbegriff des Patentanspruchs 1.

Aus dem Aufsatz "Mobilkommunikation auf Expansionskurs", in telcom report 18 (1995), Heft 2, Seiten 52 bis 55, sind universelle Übertragungsnetze (UMTS Universal Mobile Telecommunications System, FPLMTS Future Public Land Mobile Telecommunications System) bekannt, in denen unterschiedliche Netze und Netzdienste zur personenbezogenen mobilen Telekommunikation zusammengefaßt sind. Für die Netzteilnehmer - ob Mobilfunkteilnehmer oder Festnetzteilnehmer - entsteht dadurch ein universeller Zugang zu einem Übertragungsnetz, in dem zur Sprach-, Daten- und Bildkommunikation mobilfunknetzbezogene und festnetzbezogene Funktionen durchgeführt werden.

Bekanntlich können von der Funkteilnehmerstation eines Netzteilnehmers dieselben Informationen auf mehreren redundanten Übertragungspfaden, die über eine Funkübertragungsschnittstelle vom Netz zur Funkteilnehmerstation oder von der Funkteilnehmerstation zum Übertragungsnetz parallel aufgebaut sind, ausgesendet werden (Macro Diversity), um eine möglichst gute Übertragungsqualität zu erreichen. Dies bedeutet, daß die Signalisierungs- und/oder Nutzinformationen, die üblicherweise in einen oder mehrere Übertragungsrahmen eingefügt werden, von mehreren Funkeinrichtungen - beispielsweise Basis-Sende /Empfangsstationen des Übertragungsnetzes empfangen werden. Die Informationsübertragung über parallele redundante Übertragungspfade wird beispielsweise bei einer Funkübertragungsschnittstelle angewendet, die das CDMA-Zugriffsverfahren (Code Division Multiple Access) gemäß der US-Patentschrift 5,101,501 benutzt. Die redundanten Übertragungspfade können dynamisch aufgebaut und abgebaut werden, während die Funkteilnehmerstation ihren Aufenthaltsort wechselt. Auch bei ortsfester Funkteilnehmerstation ist ein Betrieb in diesem Übertragungsmodus (Macro Diversity) über einen längeren Zeitraum möglich.

Aus der EP-A-0 679 042 ist bekannt, in einem ATM-Netzwerk mit einer Nutzung einer Funkschnittstelle zur Übertragung von Informationen von bzw. zu einer Mobilstation, durch einen Aufbau von redundanten Pfaden durch die Mobilstation eine verbesserte Übertragungsqualität zu erhalten. Die dadurch benötigte höhere Übertragungskapazität für die Übertragung von ATM-Zellen in dem Zugangsnetzwerk (Access-Network) zwischen Basisstationen, mit denen die Mobilstation in Funkverbindung steht, und einer Mobilnetzschnittstelleneinheit (Mobile Network Interface Unit) wird dadurch verringert, daß Unternetzwerke (Sub-Networks) in dem Zugangsnetzwerk gebildet werden und in deren Schnittstellen (Sub Network Interfaces) redundante Pfade kombiniert bzw. aufgeteilt werden.

Die Informationen, die von der Funkteilnehmerstation in den Übertragungsrahmen auf verschiedenen Übertragungspfaden ausgesendet werden, können im Übertragungsnetz an Kombinationspunkten zusammengeführt werden, an denen in der einen Übertragungsrichtung (uplink) jeweils zwei Übertragungspfade zu einem einzelnen Übertragungspfad kombiniert und in der anderen Übertragungsrichtung (downlink) der einzelne Übertragungspfad in zwei Übertragungspfade aufgeteilt werden. Die Anzahl und Verteilung der Kombinationspunkte auf Netzelemente des Übertragungsnetzes ändert sich dynamisch mit dem Hinzufügen bzw. Entfernen von redundanten Übertragungspfaden, die von der Funkteilnehmerstation zusätzlich aufgebaut bzw. wieder abgebaut werden können.

Für eine bestmögliche Nutzung der Netzelemente des universellen Übertragungsnetzes ist es erforderlich, einen Übergangspunkt festzulegen, an dem mobilfunkspezifisch kodierte Informationen in festnetzspezifisch kodierte Informationen umgesetzt werden müssen. Da der Übergangspunkt alle mobilfunkspezifischen Funktionen abschließt, kann bei Vorhandensein mehrerer redundanter Übertragungspfade im Übertragungsnetz eine Umsetzung erst nach allen Kombinationspunkten erfolgen. Durch das dynamische Hinzufügen und Entfernen von redundanten Übertragungspfaden ergeben sich Änderungen bei der Anzahl und Verteilung der Kombinationspunkte und somit bei der Festlegung des Übergangspunkts im Übertragungsnetz.

Daher ist es Aufgabe der vorliegenden Erfindung, ein Verfahren anzugeben, durch das bei dynamischem Aufbau bzw. Abbau von redundanten Übertragungspfaden (Macro Diversity) der Übergangspunkt im Übertragungsnetz flexibel festgelegt werden kann.

Diese Aufgabe wird gemäß der Erfindung durch die Merkmale des Patentanspruchs 1 gelöst. Weiterbildungen der Erfindung sind in den Unteransprüchen angegeben.

Dadurch, daß die Funkteilnehmerstation die Anzahl der parallelen Übertragungspfade, die sich dynamisch ändert, kennt, wird von ihr eine Information über die Gesamtanzahl der im Übertragungsnetz erforderlichen Kombinationspunkte in den Übertragungsrahmen eingetragen. An den Kombinationspunkten im Übertragungsnetz wird jeweils die Anzahl der Kombinationspunkte, die von den ankommenden Übertragungsrahmen durchlaufen worden sind, ermittelt und eine Information darüber im abgehenden Übertragungsrahmen mitgesendet. Durch Kenntnis der Gesamtanzahl der Kombinationspunkte und der Anzahl der bereits durchlaufenen Kombinationspunkte an jedem Kombinationspunkt wird der Kombinationspunkt, an dem die Gesamtanzahl der Kombinationspunkte erreicht wird, als Übergangspunkt im Übertragungsnetz dynamisch und flexibel ausgewählt.

Durch das erfindungsgemäße Verfahren wird der Übergangspunkt zur Umsetzung der mobilfunknetzspezifisch kodierten Informationen in festnetzspezifisch kodierte Informationen auch bei dynamischem Auf- und Abbau von redundanten Übertragungspfaden (Macro Diversity) dort lokalisiert, wo ein Kombinationspunkt die letzten beiden Übertragungspfade kombiniert. Dabei weist das Verfahren gemäß der Erfindung auch den Vorteil auf, daß zur Festlegung des optimalen Übergangspunkts bei Verwendung des Übertragungsmodus "Macro Diversity" ein zusätzlicher Signalisierungsaufwand in Form von Signalisierungsnachrichten nicht erforderlich ist. Es genügt, wenn der Übergangspunkt anhand der jeweils mitgesendeten neuen Informationen ausgewählt wird. Trotz des dynamischen Aufbaus und Abbaus redundanter Übertragungspfade auf der Funkübertragungsschnittstelle ist gewährleistet, daß der Übergangspunkt sich in einem Netzelement des Übertragungsnetzes befindet, das - aus der Sicht der verschiedenen Netzebenen eines Netzes - möglichst "nahe" bei der Funkteilnehmerstation liegt.

Gemäß einer Weiterbildung der Erfindung wird die Information über die Anzahl der bereits durchlaufenen Kombinationspunkte in den abgehenden Übertragungsrahmen solange eingetragen, bis die Gesamtanzahl der Kombinationspunkte erreicht ist

Gemäß einer anderen Weiterbildung der Erfindung wird zur Ermittlung der Anzahl der durchlaufenen Kombinationspunkte ein Kombinationspunktzähler in den Übertragungsrahmen eingefügt, so daß an jedem Kombinationspunkt die aktuellen Zählerwerte der Kombinationspunktzähler, die in den ankommenden Übertragungsrahmen enthalten sind, addiert werden können. Der aus der Addition resultierende Zählerwert wird im jeweiligen Kombinationspunkt um Eins erhöht und das Ergebnis mit der in den Übertragungsrahmen eingetragenen Gesamtanzahl der Kombinationspunkte auf Übereinstimmung verglichen. Sobald der resultierende Zählerwert des Kombinationspunktzählers an einem Kombinationspunkt den Wert für die Gesamtanzahl der Kombinationspunkte erreicht, sind alle Kombinationen von redundanten Übertragungspfaden im Übertragungsnetz durchgeführt worden. Daher kann die Umsetzung der mobilfunknetzspezifisch kodierten Informationen in festnetzspezifisch kodierte Informationen an diesem Kombinationspunkt bzw. durch das entsprechende Netzelement durchgeführt werden.

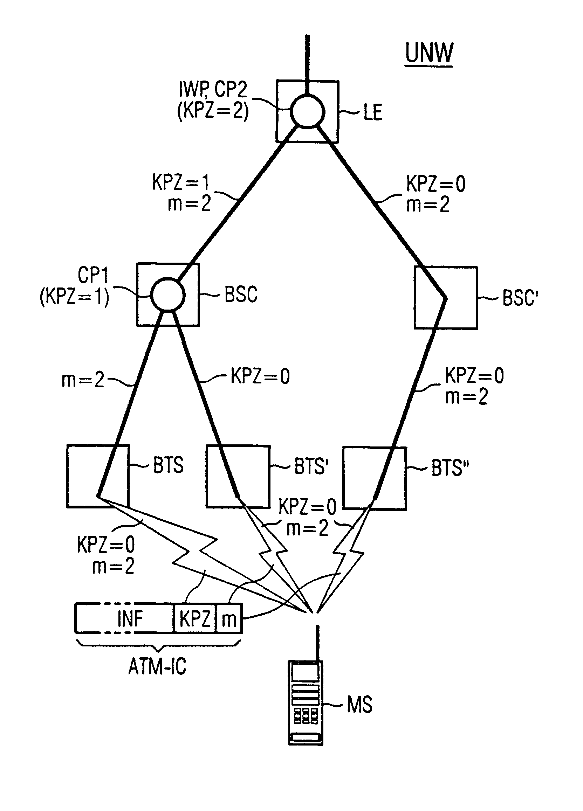

Die Erfindung wird anhand eines in einer Figur dargestellten Ausführungsbeispiels erläutert. Die Figur zeigt den Informationsfluß auf verschiedenen redundanten Übertragungspfaden, die an Kombinationspunkten in einem universellen Übertragungsnetz zusammengeführt werden.

In einem Blockschaltbild sind die Netzelemente eines universellen Übertragungsnetzes UNW, in dem sowohl mobilfunknetzspezifisch kodierte Informationen als auch festnetzspezifisch kodierte Informationen zur personenbezogenen Mobilkommunikation zwischen Netzteilnehmern übertragen werden. Das universelle Übertragungsnetz UNW ermöglicht den Netzteilnehmern unterschiedlicher Zugangsnetze, wie beispielsweise Mobilfunknetz und Festnetz, eine personenbezogene mobile Kommunikation unabhängig vom jeweiligen Zugangsnetz. Im vorliegenden Beispiel weist das Übertragungsnetz UNW als Netzelemente mehrere Funkeinrichtungen BTS, BTS' und BTS'', mehrere Steuereinrichtungen BSC und BSC' und mindestens eine Vermittlungseinrichtung LE auf. Selbstverständlich sind weitere Netzelemente vorhanden, die für das Verständnis der Erfindung aber nicht erforderlich sind. Die Funkeinrichtungen BTS, BTS' und BTS'' empfangen die Informationen, die von einer Funkteilnehmerstation MS zum Netz gesendet werden, in der Aufwärtsübertragungsrichtung (Uplink) und senden die Informationen, die vom Übertragungsnetz (Downlink) empfangen werden, in der Abwärtsübertragungsrichtung jeweils über eine Funkübertragungsschnittstelle. Dabei bedient jede Funkeinrichtung BTS... üblicherweise eine Funkzelle, die in einem zellular aufgebauten Netz den kleinsten Funkversorgungsbereich darstellt. Durch den Einsatz von Richtantennen an einem Standort der Funkeinrichtung BTS... kann eine Funkzelle in zwei oder mehr sektorierte Zellen unterteilt werden, die vom Netz als gewöhnliche Funkzellen behandelt werden.

Die Steuereinrichtungen BSC und BSC' übernehmen die funktechnischen Steuerungsfunktionen im Übertragungsnetz, wie beispielsweise die Funkverarbeitungsfunktionen, die Verwaltung der Funkeinrichtungen, die Funkkanalverwaltung usw. Dabei bedient jede Steuereinrichtung BSC bzw. BSC' eine oder mehrere Funkeinrichtungen BTS... BTS''. An die Steuereinrichtungen BSC und BSC' ist die Vermittlungseinrichtung LE angeschlossen, die neben anderen Vermittlungseinrichtungen im Vermittlungssystem des Übertragungsnetzes angeordnet ist. Dabei übernimmt das Vermittlungssystem alle mobilfunknetzbezogenen und festnetzbezogenen Vermittlungsfunktionen, die den Aufbau und Abbau von Anrufverbindungen, die Leitweglenkung (routing) im universellen Übertragungsnetz betreffen. Im vorliegenden Beispiel besteht die Vermittlungseinrichtung LE aus einer lokalen Vermittlungseinrichtung (Local Exchange), wie sie beispielsweise zur Vermittlung in lokal begrenzten Gebieten eines Festnetzes verwendet wird.

Die Funkteilnehmerstation MS arbeitet in einem Übertragungsmodus, bei dem für eine logische Verbindung mehrere redundante Übertragungspfade zu den Funkeinrichtungen BTS...BTS'' zu demselben Zeitpunkt parallel aufgebaut werden (Macro Diversity). Dies bedeutet, daß über die Funkübertragungsschnittstelle dieselben Informationen, die in einander entsprechenden Übertragungsrahmen eingetragen sind, von den Funkeinrichtungen BTS...BTS'' empfangen werden. Dabei enthalten die Übertragungsrahmen mobilfunknetzspezifisch kodierte Informationen, die sowohl Signalisierungsinformationen als auch Sprachund Dateninformationen sein können. Dadurch, daß von der Funkteilnehmerstation MS insgesamt m+1 Übertragungspfade parallel aufgebaut worden sind, kann von ihr eine Information über die Gesamtanzahl der erforderlichen m Kombinationspunkte zur Kombination von jeweils zwei Übertragungspfaden in den jeweils auszusendenden Übertragungsrahmen eingetragen werden. Im vorliegenden Beispiel werden insgesamt m+1=3 redundante Übertragungspfade parallel aufgebaut, so daß im Übertragungsnetz an m=2 Kombinationspunkten CP1 und CP2 jeweils die Informationen von zwei ankommenden Übertragungsrahmen zu Informationen in einem abgehenden Übertragungsrahmen zusammengefügt werden. Neben der Information über m Kombinationspunkte hinaus wird in den jeweiligen Übertragungsrahmen ein Kombinationspunktzähler KPZ eingefügt und zu Beginn jeder Informationsübertragung auf den Zählerwert 0 eingestellt.

Im vorliegenden Beispiel befinden sich die mobilfunknetzspezifisch kodierten Informationen INF in einem Übertragungsrahmen, der eine nach dem Asynchronen Transfermodus (Asynchronous Transfer Modus, ATM) gebildete Informationszelle ATM-IC ist. Bekanntlich weist jede ATM-Informationszelle ATM-IC ein Kopffeld (Header) der Länge 5 Byte und ein Informationsfeld (PayLoad) der Länge 48 Byte auf. Für maximal m+1=4 parallele Übertragungspfade und somit eine maximale Gesamtanzahl von m=3 Kombinationspunkten genügt in jeder ATM-Informationszelle ein halbes Informationsbyte für den Kombinationspunktzähler KPZ und für die Gesamtanzahl m der Kombinationspunkte. Dabei sind jeweils zwei Bit für den Kombinationspunktzähler KPZ und zwei Bit für die Gesamtanzahl m reserviert. Insgesamt erniedrigt sich die Informationsübertragungskapazität in der ATM-Informationszelle durch die neu aufgenommenen Informationen KPZ, m nur geringfügig (4 Bit von 48 Informationsbytes). Die mobilfunknetzspezifisch kodierten Informationen INF, der Kombinationspunktzähler KPZ und die Information über die Gesamtanzahl m der Kombinationspunkte können auch in Informationsblöcken gemäß einem synchronen oder plesiochronen Transfermodus (SDH oder PDH) übertragen werden.

Im vorliegenden Beispiel werden von der Funkteilnehmerstation MS zwei redundante Übertragungspfade zu den Funkeinrichtungen BTS und BTS' und ein dritter Übertragungspfad zur Funkeinrichtung BTS'' aufgebaut. Der Aufbau und Abbau von redundanten Übertragungspfaden ist aber auch grundsätzlich vom Übertragungsnetz her zur Funkteilnehmerstation möglich. Zu Beginn der Informationsübertragung weisen der Kombinationspunktzähler KPZ den Zählerwert KPZ=0 (in dezimaler Darstellung) und die Gesamtanzahl m der Kombinationspunkte den Wert m=2 (in dezimaler Darstellung) auf. Von den Funkeinrichtungen BTS und BTS' werden die beiden ankommenden Übertragungsrahmen mit den identischen Informationen auf zwei Übertragungspfaden zur Steuereinrichtung BSC weitergeleitet. Von der Funkeinrichtung BTS'' werden die im entsprechenden Übertragungsrahmen empfangenen Informationen zur Steuereinrichtung BSC' über den dritten Übertragungspfad gesendet. An einem Kombinationspunkt CP1 in der Steuereinrichtung BSC werden die auf den beiden Übertragungspfaden ankommenden identischen Informationen zusammengeführt. Dabei erfolgt die Ermittlung der Anzahl der von den beiden ankommenden Übertragungsrahmen bereits durchlaufenen Kombinationspunkte derart, daß die aktuellen Zählerwerte der Kombinationspunktzähler KPZ in den Übertragungsrahmen addiert werden, und der aus der Addition resultierende Zählerwert um Eins erhöht wird. Die daraus resultierende Anzahl der bereits durchlaufenden Kombinationspunkten, die im vorliegenden Beispiel für den Kombinationspunktzähler KPZ den neuen Zählerwert KPZ=1 (aus 0+0+1) ergibt, wird in den abgehenden Übertragungsrahmen eingetragen und zusammen mit der unveränderten Gesamtanzahl m=2 der Kombinationspunkte auf dem einzelnen abgehenden Übertragungspfad zur Vermittlungseinrichtung LE ausgesendet.

Die Informationen, die von der Steuereinrichtung BSC' auf dem einzelnen Übertragungspfad empfangen werden, werden unmittelbar zur Vermittlungseinrichtung LE weitergeleitet, ohne daß an einem Kombinationspunkt eine Zusammenführung von zwei redundanten Übertragungspfaden erforderlich ist. Daher behalten die in dem Übertragungsrahmen enthaltenen Informationen über die Gesamtanzahl m der Kombinationspunkte und über die Anzahl der bereits durchlaufenen Kombinationspunkte, erkennbar an dem Kombinationspunktzähler KPZ, die ursprünglich eingetragenen Werte KPZ = 0 und m = 2 (jeweils in dezimaler Darstellung). In der Vermittllungseinrichtung LE werden die beiden einzelnen Übertragungspfade, die von den Steuereinrichtungen BSC und BSC' aufgebaut wurden, an einem Kombinationspunkt CP2 kombiniert. Die in den beiden ankommenden Übertragungsrahmen enthaltenen Informationen werden wiederum zusammengeführt und in einen abgehenden Übertragungsrahmen eingetragen, der auf einem einzelnen Verbindungspfad von der Vermittlungseinrichtung LE ausgesendet wird. An dem Kombinationspunkt CP2 in der Vermittlungseinrichtung LE wird erneut die Anzahl der von den ankommenden Übertragungsrahmen bereits durchlaufenen Kombinationspunkte gemäß dem oben beschriebenen Verfahren ermittelt, so daß sich für den Kombinationspunktzähler KPZ ein neuer Zählerwert KPZ = 2 (aus 1 + 0 +1) einstellt. Der Vergleich des neuen Zählerwertes für den Kombinationspunktzähler KPZ mit der Gesamtanzahl m der Kombinationspunkte ergibt eine Übereinstimmung, so daß der in der Vermittlungseinrichtung LE liegende Kombinationspunkt CP2 als Übergangspunkt IWP (Interworking Point) im Übertragungsnetz gewählt wird, an dem die in dem Übertragungsrahmen enthaltenen mobilfunknetz-spezifisch kodierten Informationen in festnetz-spezifisch kodierte Informationen zur Weiterverarbeitung in nächstfolgenden Netzelementen des Übertragungsnetzes umgesetzt werden.

Sobald die Funkteilnehmerstation MS einen der redundanten Übertragungspfade auf der Funkübertragungsschnittstelle abbaut bzw. hinzufügt, ändert sich die Gesamtanzahl m der Kombinationspunkte im Netz. Bei Wegnahme eines redundanten Übertragungspfades liegt der einzige Kombinationspunkt CP1 vor, der in der Steuereinrichtung BSC angeordnet und als neuer Übergangspunkt nach dem erfindungsgemäßen Verfahren ausgewählt wird. Bei Hinzufügen eines weiteren redundanten Übertragungspfades, der zu einer nicht dargestellten Funkeinrichtung aufgebaut wird, erfolgt auch in der Steuereinrichtung BSC' die Kombination zweier Übertragungspfade an einem Kombinationspunkt. Als Übergangspunkt IWP im Übertragungsnetz wird nach wie vor der in der Vermittlungseinrichtung LE liegende Kombinationspunkt CP2 ausgewählt, da dort die Gesamtanzahl m von insgesamt drei durchlaufenen Kombinationspunkten nach dem erfindungsgemäßen Verfahren erkannt wird.

## Patentansprüche

1. Verfahren zur Übertragung von Informationen in einem universellen Übertragungsnetz (UNW), in dem mobilfunknetzspezifische und festnetzspezifische Funktionen durchgeführt werden und in dem dieselben Informationen, die zwischen dem Übertragungsnetz (UNW) und einer Funkteilnehmerstation (MS) auf verschiedenen redundanten Übertragungspfaden, die über eine Funkübertragungsschnittstelle parallel aufgebaut sind, in Übertragungsrahmen gesendet werden, an Kombinationspunkten (CP1, CP2) zusammengeführt werden, an denen in der einen Übertragungsrichtung jeweils zwei Übertragungspfade zu einem einzelnen Übertragungspfad kombiniert und in der anderen Übertragungsrichtung der einzelne Übertragungspfad in zwei Übertragungspfade aufgeteilt werden,
**dadurch gekennzeichnet,**
**daß** von der Funkteilnehmerstation (MS) eine Information über die Gesamtanzahl m von Kombinationspunkten, die zur Kombination von m+1 parallel aufgebauten Übertragungspfaden verwendet werden, in den Übertragungsrahmen eingetragen wird,
**daß** an den Kombinationspunkten (CP1, CP2) im Übertragungsnetz jeweils die Anzahl der von den ankommenden Übertragungsrahmen durchlaufenen Kombinationspunkte ermittelt und eine Information darüber im abgehenden Übertragungsrahmen mitgesendet wird und
**daß** der Kombinationspunkt (CP2), an dem die Gesamtanzahl m der durchlaufenen Kombinationspunkte erreicht wird, als Übergangspunkt (IWP) im Übertragungsnetz gewählt wird, an dem die in dem Übertragungsrahmen enthaltenen mobilfunknetzspezifisch kodierten Informationen (INF) in festnetzspezifisch kodierte Informationen umgesetzt werden.

2. Verfahren nach Anspruch 1,
**dadurch gekennzeichnet,**
**daß** an den Kombinationspunkten (CP1, CP2) jeweils eine Information über die Anzahl der bereits durchlaufenen Kombinationspunkte in den abgehenden Übertragungsrahmen solange eingetragen wird, bis die Gesamtanzahl m der Kombinationspunkte erreicht ist.

3. Verfahren nach Anspruch 1 oder 2,
**dadurch gekennzeichnet,**
**daß** zur Ermittlung der Anzahl der durchlaufenen Kombinationspunkte ein Kombinationspunktzähler (KPZ) in den Übertragungsrahmen eingefügt wird,
**daß** an jedem Kombinationspunkt (CP1, CP2) die aktuellen Zählerwerte der Kombinationspunktzähler (KPZ), die in den auf beiden kombinierten Übertragungspfaden ankommenden Übertragungsrahmen enthalten sind, addiert werden und
**daß** der aus der Addition resultierende Zählerwert um Eins erhöht und das Ergebnis mit der Gesamtanzahl m der Kombinationspunkte auf Übereinstimmung verglichen wird.

4. Verfahren nach einem der vorhergehenden Ansprüche,
**dadurch gekennzeichnet,**
**daß** der Übergangspunkt (IWP) in eine Funkeinrichtung (z.B. BSC) oder in eine Vermittlungseinrichtung (z.B. LE) des Übertragungsnetzes gelegt wird.

5. Verfahren nach einem der Ansprüche 1 bis 4,
**dadurch gekennzeichnet,**
**daß** in dem Übertragungsrahmen mobilfunkspezifisch kodierte Informationen (INF) übertragen werden, und daß als Übertragungsrahmen jeweils eine nach dem Asynchronen Transfermodus (ATM) zu übertragende Informationszelle (ATM-IC) verwendet wird, in die die Information über die Gesamtanzahl m der Kombinationspunkte und über die jeweils ermittelte Anzahl der durchlaufenen Kombinationspunkte eingefügt werden.

6. Verfahren nach einem der Ansprüche 1 bis 4,
**dadurch gekennzeichnet,**
**daß** in dem Übertragungsrahmen mobilfunkspezifisch kodierte Informationen übertragen werden, und daß als Übertragungsrahmen jeweils ein nach einem synchronen Transfermodus zu übertragender Informationsblock verwendet wird, in den die Information über die Gesamtanzahl m der Kombinationspunkte und über die jeweils ermittelte Anzahl der durchlaufenen Kombinationspunkte eingefügt werden.

## Claims

1. Method for transmitting information in a universal transmission network (UNW), in which functions which are specific to a mobile radio network and functions which are specific to a landline network are carried out, and in which the same information which is transmitted in transmission frames between the transmission network (UNW) and a radio subscriber station (MS) on different redundant transmission paths, which are set up in parallel via a radio transmission interface, are combined at combination points (CP1, CP2), at which in each case two transmission paths in the one transmission direction are combined to form a single transmission path, and the single transmission path in the other transmission direction is split into two transmission paths,
**characterized**
**in that** the radio subscriber station (MS) enters information in the transmission frame about the total number m of combination points which are used for combination of m+1 transmission paths which are set up in parallel, in that the number of combination points through which the incoming transmission frames pass is determined at each of the combination points (CP1, CP2) in the transmission network, and information relating to this is also transmitted in the outgoing transmission frame, and
**in that** the combination point (CP2) at which the total number m of combination points that have been passed through is reached is chosen as the interworking point (IWP) in the transmission network, at which the information (INF) which is contained in the transmission frame and is coded in a mobile-radio-network specific manner is converted to information which is coded in a landline-network specific manner.

2. Method according to Claim 1,
**characterized**
**in that** information about the number of combination points which have already been passed through is transmitted in each of the outgoing transmission frames at the combination points (CP1, CP2) until the total number m of combination points is reached.

3. Method according to Claim 1 or 2,
**characterized**
**in that** a combination point counter (KPZ) is inserted into the transmission frame in order to determine the number of combination points which have been passed through,
**in that** the current counter values of the combination point counters (KPZ) which are contained in the transmission frames which arrive on the two combined transmission paths are added at each combination point (CP1, CP2), and
**in that** the counter value which results from the addition process is incremented by one and the result is compared with the total number m of combination points, for a match.

4. Method according to one of the preceding claims,
**characterized**
**in that** the interworking point (IWP) is located in a radio device (for example BSC) or in a switching centre, (for example LE) in the transmission network.

5. Method according to one of Claims 1 to 4,
**characterized**
**in that** information (INF) which is coded in a mobile-radio specific manner is transmitted in the transmission frame, and in that an information cell (ATM-IC) which is to be transmitted using the asynchronous transfer mode (ATM) is in each case used as the transmission frame, into which the information relating to the total number m of combination points and relating to the respectively determined number of combination points which have been passed through is inserted.

6. Method according to one of Claims 1 to 4,
**characterized**
**in that** information which is coded in a mobile-radio specific manner is transmitted in the transmission frame, and in that an information block which is to be transmitted using a synchronous transfer mode is in each case used as the transmission frame in which the information relating to the total number m of combination points and relating to the respectively determined number of combination points which have been passed through is inserted.

## Revendications

1. Procédé de transmission d'informations dans un réseau universel de transmission (UNW), dans lequel des fonctions spécifiques à un réseau de téléphonie mobile et à un réseau fixe sont effectuées et dans lequel les mêmes informations établies en parallèle au moyen d'une interface de transmission radio entre le réseau de transmission (UNW) et une station d'abonné mobile (MS) sur différentes voies de transmission redondantes, émises dans des cadres de transmission, regroupées dans des points de combinaison (CP1, CP2) au niveau desquels deux voies de transmission respectivement sont combinées en une voie de transmission dans l'un des sens de transmission et la voie de transmission individuelle est divisée en deux voies de transmission dans l'autre sens de transmission, **caractérisé en ce que** la station d'abonné mobile (MS) inscrit dans les cadres de transmission une information sur le nombre total m de points de combinaison utilisés pour la combinaison de m+1 voies de transmission établies en parallèle, **en ce que** le nombre des points de combinaison parcourus par les cadres de transmission arrivant respectivement est calculé au niveau des points de combinaison (CP1, CP2) dans le réseau de transmission et **en ce qu'**une formation à ce sujet est envoyée dans le cadre de transmission sortant et **en ce que** le point de combinaison (CP2) au niveau duquel le nombre total m de points de combinaison parcourus est atteint, est sélectionné comme point de transition (IWP) dans le réseau de transmission, au niveau duquel les informations codées (INF) spécifiques à un réseau de téléphonie mobile contenu dans le réseau de transmission sont converties en informations codées spécifiques à un réseau fixe.

2. Procédé selon la revendication 1,
**caractérisé en ce qu'**une information sur le nombre des points de combinaison déjà parcourus est inscrite dans les cadres de transmission sortant au niveau des points de combinaison (CP1, CP2) jusqu'à ce que le nombre total m de points de combinaison soit atteint.

3. Procédé selon la revendication 1 ou 2, **caractérisé en ce que** un compteur de points de combinaison (KPZ) est intégré dans le cadre de transmission pour calculer le nombre de points de combinaison parcourus, **en ce que** les valeurs comptées actuelles des compteurs de points de combinaison (KPZ) à chaque point de combinaison (CP1, CP2), contenues dans les cadres de transmission arrivant sur les deux voies de transmission combinées, sont ajoutées et **en ce que** la valeur comptée résultant de l'addition est augmentée d'un chiffre et **en ce que** la correspondance du résultat avec le nombre total m de points de combinaison est comparée.

4. Procédé selon l'une des revendications précédentes, **caractérisé en ce que** le point de transition (IWP) est placé dans une installation radio (par ex. BSC) ou dans un commutateur (par ex. LE) du réseau de transmission.

5. Procédé selon l'une des revendications 1 à 4, **caractérisé en ce que** des informations codées (INF) spécifiques à un réseau de téléphonie mobile sont transmises dans le cadre de transmission et **en ce qu'**une cellule d'information (ATM-IC) à transmettre selon le mode de transfert asynchrone (ATM), dans laquelle des informations sur le nombre total m de points de combinaison et sur le nombre de points de combinaison parcourus calculés respectivement sont inscrits, est utilisé comme cadre de transmission.

6. Procédé selon l'une des revendications 1 à 4, **caractérisé en ce que** des informations codées spécifiques à un réseau de téléphonie mobile sont transmises dans le cadre de transmission et **en ce que** un bloc d'information à transmettre selon le mode de transfert synchrone, dans lequel l'information sur le nombre total m de points de combinaison et sur le nombre de points de combinaison parcourus calculés respectivement sont intégrés, est utilisé comme cadre de transmission.
